Europäisches Patentamt

European Patent Office

Office européen des brevets

(11) Publication number: **0 091 678**
**A2**

# (12) EUROPEAN PATENT APPLICATION

(21) Application number: **83103459.0**

(22) Date of filing: **08.04.83**

(51) Int. Cl.³: **H 04 N 3/15**

(30) Priority: **12.04.82 JP 61472/82**
**30.03.83 JP 54366/83**

(43) Date of publication of application:
**19.10.83 Bulletin 83/42**

(84) Designated Contracting States:
**DE FR GB**

(71) Applicant: **Matsushita Electric Industrial Co., Ltd.**
**1006, Oaza Kadoma**
**Kadoma-shi Osaka-fu, 571(JP)**

(72) Inventor: **Fujimoto, Makoto**
**22-12, Hiyoshidai 7-bancho**
**Takatsuki City, 569(JP)**

(74) Representative: **Kirschner, Klaus Dieter et al,**
**Patentanwälte Kirschner & Grosse**
**Herzog-Wilhelm-Strasse 17**
**D-8000 München 2(DE)**

(54) Solid state imaging apparatus.

(57) A solid state imaging apparatus comprising a plural of photoelectric devices disposed in two-dimensional arrangement, gate means connected to each photoelectric device to read out signals to vertical lines $\ell_1$, $\ell_2$, $\ell_3$ ..., and horizontal lines $L_1$, $L_2$ ... for conveying vertical scanning control signals to the gate means, has a vertical shift register 302, which feed the vertical scanning control signals to said horizontal lines $L_1$, $L_2$ ..., is substantially directly connected to the horizontal lines, the vertical scanning control signals have at least two pulses within one horizontal scanning time period, so that neighboring two lines of the gate means are switched on at closely disposed but different time in the one horizontal scanning time period. Thus, flickering due to stray capacities is eliminated.

FIG.3

PATENTANWÄLTE

KLAUS D. KIRSCHNER      1      WOLFGANG GROSSE
DIPL.-PHYSIKER                         DIPL.-INGENIEUR

ZUGELASSENE VERTRETER VOR DEM
EUROPAISCHEN PATENTAMT

HERZOG-WILHELM-STR. 17
D-8 MÜNCHEN 2

Matsushita Electric Industrial Co.,Ltd.
Osaka, Japan

IHR ZEICHEN:
YOUR REFERENCE:

UNSER ZEICHEN:   H 4874 K/UK
OUR REFERENCE:

---

Solid state imaging apparatus

---

DATUM: 8. April 1983

The present invention relates to an improvement
in solid state imaging apparatus having two-dimensionally
disposed photodiodes with electronic switches for scanningly
taking out outputs of the photosensitive elements.

2.  Description of the Prior Art:

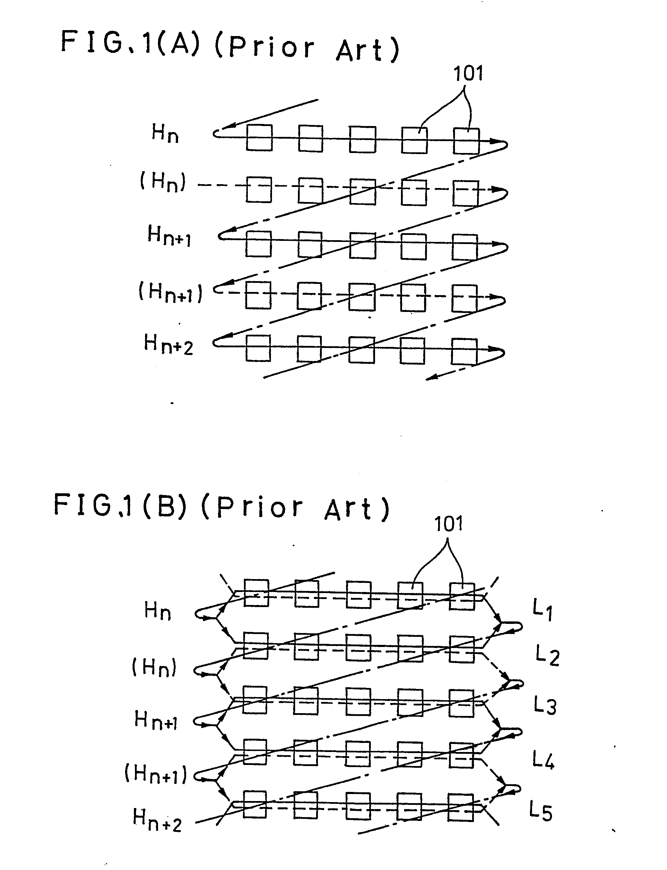

There have been many proposals of the solid state
imaging apparatuses, wherein various signal collecting
means such as MOS FET type or CCD type are used.  On the other hand
there are several proposals for scanning method of such
devices.  In general, in order to meet NTSC standard, the
apparatus is designed to make the known interlace scannings.
That is,as shown in FIG. 1(A), in a solid state apparatus
having the two-dimensionally disposed phtosensitive elements
101,a scanning for a first field is made  as shown by solid
state horizontal lines.  The scanning is made every two lines
by skipping one lines inbetween, and in a second field,
every two lines shown by dotted horizontal lines,which
have not been scanned in the first field scanning, are
scanned sequentially.  As one of modification of the above-
mentioned interlace scanning method, there is a method
which can be called  two-line    interlace scanning, such as disclosed in the Japanese published unexamined Patent Application Sho 51-56123. The above-mentioned two-line interlace scanning is elucidated referring to FIG. 1(B), wherein in the first field scanning, adjacent picture elements of two lines $L_1$ and $L_2$, and subsequently $L_3$ and $L_4$, and subsequently $L_5$ and $L_6$ are simultaneously scanned as shown by solid horizontal lines. And in the second field scanning, scanning is made shifting by one line, that is horizontal lines $L_2$ and $L_3$ are simultaneously scanned, and subsequently the horizontal lines $L_4$ and $L_5$ are simultaneously scanned. Such two-line interlace scanning has advantage in improved after image characteristic. The reason of the advantage is elucidated as follows.

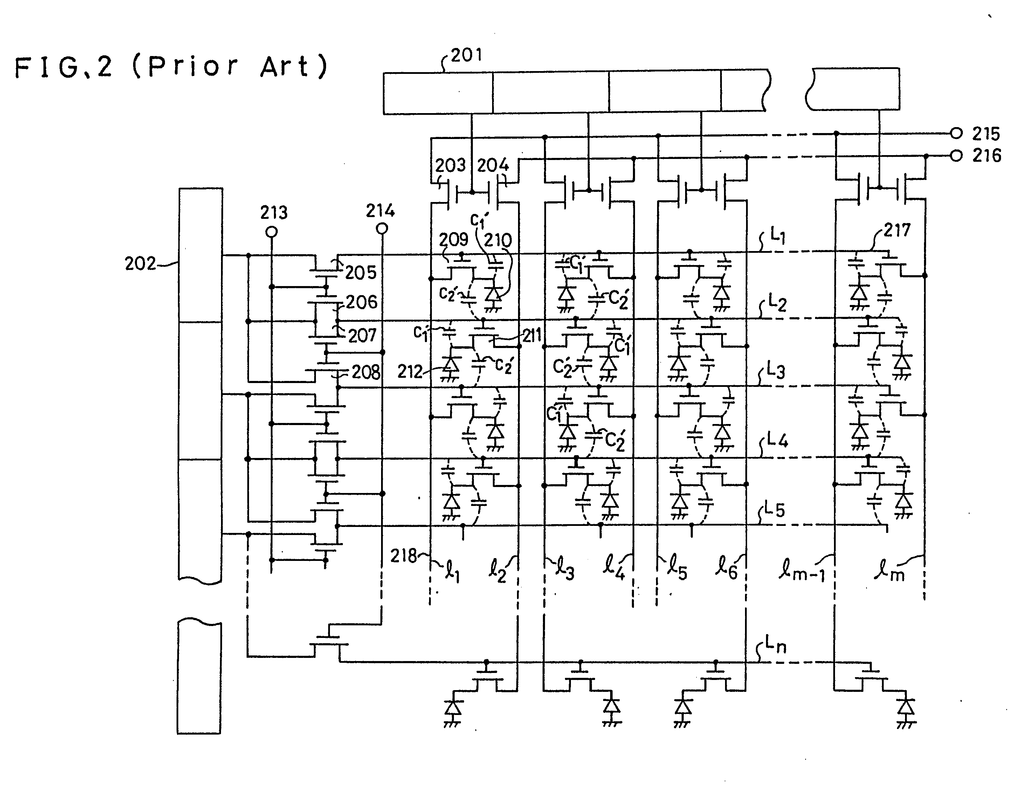

One prior art example of such two line interlace scanning method is shown in FIG. 2 wherein selection gate 209 for each photodiode 210 as picture element is connected to receive control signal from horizontal read out signal line 217, and to give output signal to vertical line 218.

In FIG. 1(A) and FIG. 1(B), the solid horizontal lines indicate horizontal scannings in the first field and the dotted horizontal lines indicate horizontal scannings in the second field, and $H_n$, $H_{n+1}$, $H_{n+2}$ ... indicate nth, (n+1)th, (n+2)th ... lines of the first field, respectively, and $(H_n)$, $(H_{n+1})$, $(H_{n+2})$ ... indicate nth, (n+1)th, (n+2)th ... lines of the second field, respectively.

The horizontal control signal line 217 consisting of n lines, $L_1$, $L_2$, $L_3$ ... $L_n$ are made conductive at positive potential of the horizontal lines. Second selection gate 203 and 204 are for switching among the vertical lines 218 consisting of $\ell_1$, $\ell_2$, $\ell_3$ ... $\ell_m$, so as to control signals on the vertical lines to output terminals 215 and 216. The second selection gate 203 and 204 are selectively switched on by signals from horizontal shift register 201, which is for selective switching on of the second selection gates 203 and 204 for a horizontal scanning, to produce horizontally scanned output signal to the output terminals 215 and 216. That is, the output terminals 215 and 216 are sequentially connected to selected vertical read-out signal lines $\ell_1$ and $\ell_2$, or $\ell_3$ and $\ell_4$, or $\ell_5$ and $\ell_6$ ... . On the other hand, field signal pulse is impressed on either terminal 213 or 214 depending on the first field or the second field, respectively. Accordingly, in the first field the line selection gates 205 and 206 are switched on by the field signal impressed on the field signal terminal 213, and in the second field the line selection gates 207 and 208 are switched on by field signal impressed on the field signal terminal 214.

Thus in the first field, in a first line scanning the pair of lines $L_1$ and $L_2$ are impressed with H -signals, and in the second line scanning the pair of the third and fourth lines $L_3$ and $L_4$ are impressed with H-signals. On the other hand, in the second field, in the first line scanning the pair of the horizontal lines $L_2$ and $L_3$ are impressed with H-signal, while in the second scanning the pair of horizontal lines $L_4$ and $L_5$ are impressed with H-signal. Vertical shift register 202 sequentially impresses vertical control signal on the horizontal lines 217, $L_1$, $L_2$ ..., so as to give read-out signal to the first selection gates 209 and 211 so as to switch them on thereby to make vertical scanning. That is, in the first field the vertical control signal pulses are issued from the vertical shift register 202 to the pair of lines $\ell_1$ and $\ell_2$, the pair of lines $\ell_3$ and $\ell_4$, ....., and in the second field to the pair of lines $\ell_2$ and $\ell_3$, the pair of lines $\ell_4$ and $\ell_5$,... . Thus. photoelectric signals of the photoelectric element is issued through the first selection gates 209 and 211, and through the second selection gates 203 and 204 to the output terminals 215 and 216, respectively, thereby to make the two-line scanning as shown in FIG. 1(B).

The above-mentioned prior art example apparatus has a shortcoming of producing flicker depending on the condition of driving (as disclosed in an article: Television Gakkai (Academy) 1981 National Conference Report, p. 63, Ando et al.) Outline of the shortcoming is elucidated hereafter.

The photodiodes 210, 212 ... have stray capacities $C_1'$ and $C_2'$ with the horizontal read-out signal lines 217. And in the first field, the control signal from the vertical shift resister 202 is impressed in the first field to the pair of $L_1 + L_2$ , $L_3 + L_4$ ,... , and in the second field to the pair of $L_2 + L_3$, $L_4 + L_5$ , ..., respectively. Accordingly, respective photodiodes under the read-out condition are in the following states. In the first field, the photodiode 210 is impressed with control signals of the horizontal lines $L_1$ and $L_2$ through the stray capacities $C_1'$ and $C_2'$, while in the second field the photodiode 210 is impressed with the control signal of the horizontal line $L_2$ only, since in the second line the horizontal line $L_1$ has no vertical control signal. In the similar way, the photodiode 212 is impressed with, in the first field, the control signal of the horizontal line $L_2$ only, and in the second field, with both the control signal of the horizontal lines $L_2$ and $L_3$. That is, in the first field and in the second field, the photodiodes 210 and 212 receive different voltages originated by the control signals on the horizontal lines to the stray capacities. And this difference of the control pulses given on the photodiodes causes undesirable fractuation of output signals field by field, that is, a flickering of picture produced.

In order to eliminate such flickering, one measure to be considered may be to minimize the undesirable stray capacities. However, since the solid state imaging apparatus have a large number of photodiodes on a very small wafer together with a number of wiring lines, it is almost impossible to substantially eliminate the stray capacities.

Summary of the Invention

Accordingly, the present invention proposes a novel improved configuration of the solid state imaging apparatus wherein the above-mentioned shortcomings of the prior art can be eliminated.

That is, in the apparatus in accordance with the present invention, horizontal read-out lines $L_1$, $L_2$, $L_3$ ... $L_n$ are connected directly to respective output terminals of a vertical shift register 302, and within one horizontal scanning type period, at least two vertical control pulses are issued at differrent time points from each other to neighboring two stages of the vertical shift register 302 so as to read-out photoelectric signals of each other neighboring lines therewith.

Thereby, in reading out, signals of photodiodes 305 connected to one horizontal line $L_1$ are read-out at one time point, and signals of photodiodes connected to next horizontal line $L_2$ are read-out at a little later time point. By such configuration, the influences of vertical control signals on the horizontal

lines $L_1$ and $L_2$, ... to the photodiodes 345 through the stray capacities can be substantially eliminated, thereby enabling elimination of flickering.

Brief Explanation of the Drawing

FIG. 1(A) is a schematic front view of the prior art solid state imaging apparatus of conventional interlace scanning.

FIG. 1(B) is the schematic front view of the prior art solid state imaging apparatus of the two-line scanning type.

FIG. 2 is the circuit diagram of the prior art solid state imaging apparatus of the two-line scanning type.

FIG. 3 is a circuit diagram of a two line scanning type solid state imaging apparatus embodying the present invention.

FIG. 4 is a circuit diagram of a vertical shift register 302 of the circuit of FIG. 3 embodying the present invention.

FIG. 5 is a time chart for elucidating principle of operation of the circuit of FIG. 4.

FIG. 6(A) and FIG. 6(B) show waveforms of actual operation signals of various parts of the circuit of FIG. 4 for the first field operation and for the second field operation, respectively.

FIG. 7 is an example circuit for producing pulses shown in FIG. 6(A) and FIG. 6(B).

FIG. 8(A) and FIG. 8(B) are waveforms of signals of various parts of the circuit of FIG. 4 for the first field operation and for the second field operation, respectively.

FIG. 8(C) and FIG. 8(D) are circuit diagrams of two modified examples to be operated with the signals of FIG. 8(A) and FIG. 8(B).

FIG. 9 is a time chart showing modification of the signals of FIG. 8(A) and FIG. 8(B).

FIG. 10 is a circuit modified at a part of FIG. 3.

FIG. 11 is another circuit modified at a part of FIG. 3.

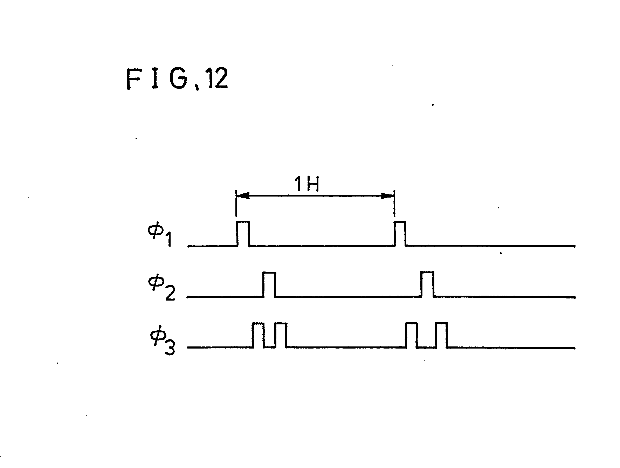

FIG. 12 is a time chart showing waveforms of signals of various parts of the circuit of FIG. 11.

Description of the Preferred Embodiments

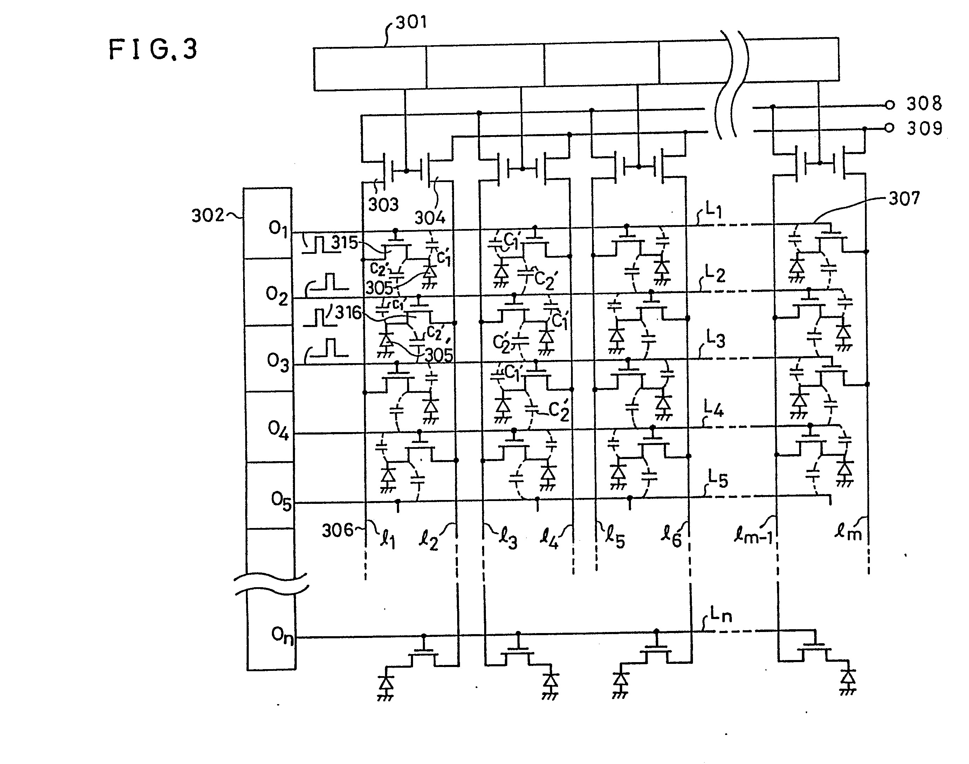

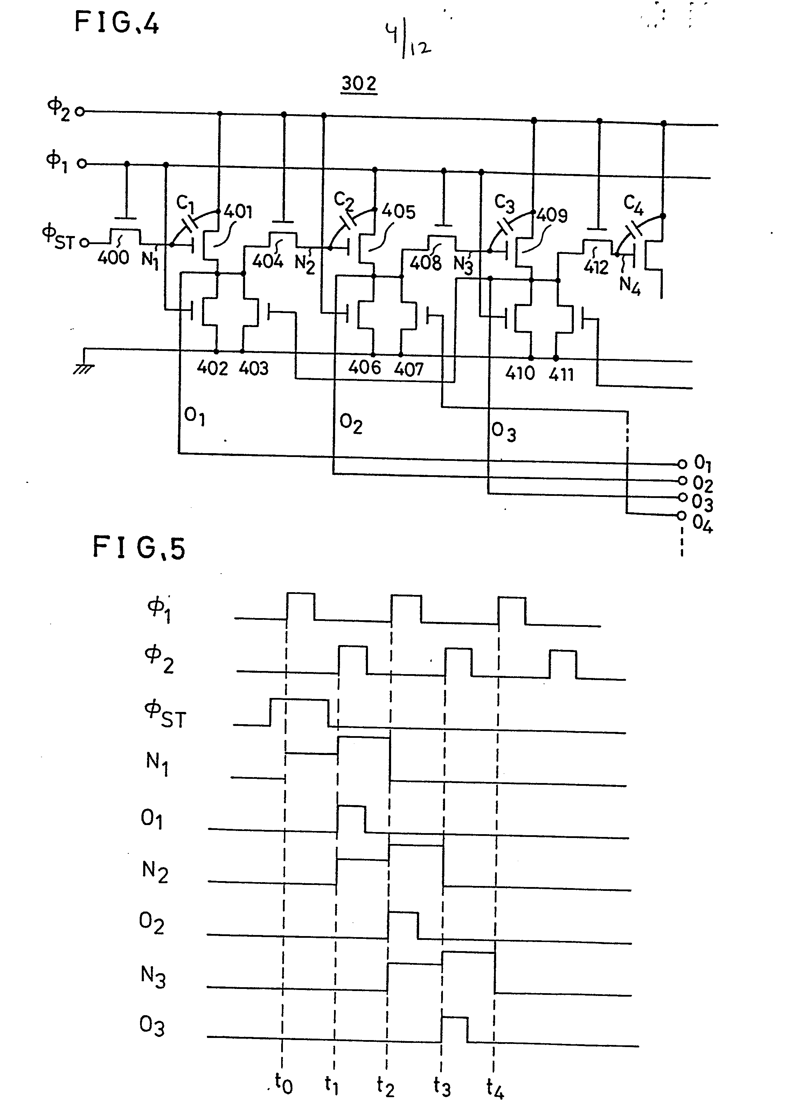

A preferred example of solid state imaging apparatus embodying the present invention is shown in FIG. 3 and a vertical shift register 302 of the circuit of FIG. 3 is shown FIG. 4.

In comparison with the circuit configuration of the prior art solid state imaging apparatus of FIG. 2, the line selection gates connected between the horizontal lines $L_1$, $L_2$ ... $L_n$ and the output terminals of the vertical shift register are omitted in the embodiment circuit of FIG. 3, and the vetical shift register 302 has the same number of stages as that of the horizontal lines $L_1$ ... $L_n$.

The vertical shift register 302 is known circuit as such and is constituted as shown in FIG. 4. Principle of operation of the circuit of FIG. 4 is elucidated with reference to waveforms of FIG. 5 wherein a pair of clock

signal $\phi_1$ and $\phi_2$ are impressed on the input terminsls $\phi_1$

and $\phi_2$ of FIG. 4, respectively. A starting pulse $\phi_{ST}$ shown

in FIG. 5 is impressed to a starting pulse input terminal

$\phi_{ST}$ of FIG. 4. The output terminals $O_1$, $O_2$, $O_3$... correspond

to the output terminals $O_1$, $O_2$, $O_3$ ... of the vertical shift register 302 of FIG. 3, respectively. In FIG. 5, at a

time point $t_0$, the clock pulse $\phi_1$ is  H  thereby making a  MOS  FET  400  of  FIG. 4 ON.   . And . at that time

the clock pulse $\phi_2$ is at L potential, thereby making a MOS FET 404 OFF. As a result of ON state of the MOS FET

400, the drain $N_1$ of the MOS FET 400 is held at H potential.

On the other, since the clock pulse $\phi_2$ is at L, a

capacitance $C_1$ between the second clock signal input terminal

and the drain $N_1$ is charged to H potential. Thereby, switching two series-connected MOS FET 401 and 402 ON, and switching a MOS FET 403 OFF. As a result, output terminal

$O_1$ turns to L potential by connection to the second clock

signal terminal $\phi_2$ through the MOS FET 402.

Then at a time point $t_1$, the second clock signal

$\phi_2$ turns to H potential, and the first clock signal turns to L potential, and the starting signal $\phi_{ST}$ becomes to L potential. Accordingly, the MOS FET 400, 402 and 403 turn to cut-off state, and therefore the MOS FET 401 is kept in ON state by means of voltage across the capacitance $C_1$,

At this time, a MOS FET 404 is ON, and at this time point of $t_1$, the output terminal $O_1$ turns to H potential by connection through the MOS FET 401 to the second clock pulse terminal $\phi_2$. At the same time, the capacitance $C_2$ is charged to make a point $N_2$ as a result of charging through the ON-state transistor 404 and 401.

Nextly, when it becomes to a time point $t_2$, the MOS FET 400 turns on as a result of H state of the first clock signal $\phi_1$, and being at L potentials of the starting signal $\phi_{ST}$ and the second clock signal $\phi_2$, the charge of the capacitor $C_1$ is discharged through the MOS FET 400. Accordingly, the MOS FET 401 is cut off, thereby the output terminal $O_1$ is kept at L potential. On the other hand the MOS FET 405 turns on by means of the charged voltage across the capacitance $C_2$, making the MOS FET 406 and 407 cut off. Accordingly, the output terminal $O_2$ becomes to H potential by connection through the MOS FET 405 to the first clock signal terminal $\phi_1$. At the same time the MOS FET 408 turns on as the clock signal becomes H, and a capacitance $C_3$ is charged, thereby making a point $N_3$ to H potential. Similarly to the above-mentioned first output terminal $O_1$, upon becoming L of the first clock signal $\phi_1$, the output terminal $O_2$ becomes L, but at this time the voltage across the capacitance $C_3$ is kept since the MOS FET 408 is cut off.

Nextly, at the time point $t_3$ the MOS FET 409 is ON and the capacitance $C_3$ is charged, and the MOS FET 410 and 411 are cut off. Accordingly, the output terminal $O_1$ is H since it is connected to the second clock signal terminal $\phi_2$ through the MOS FET 409. At this time, being given H potential at its gate from the output terminal $O_3$, the MOS FET 403 is ON, and the MOS FET 404 turns ON since second clock signal terminal $\phi_2$ is H. Also, at this time first signal clock $\phi_1$ is L and MOS FET 404 and 403 are ON, and charge in the capacitance $C_2$ is discharged through the MOS FET 403 and 404, thereby cutting off the MOS FET 405. At the same time, H potential of the output terminal $O_3$ charges the capacitor $C_4$ through MOS FET 412 which is switched on by H potential of the clock signal $\phi_2$.

By repeating the above-mentioned operations, pulse potential input to the input terminal $\phi_{ST}$ in turn makes the output terminals $O_1$, $O_2$, $O_3$ ... to H potential responding to incoming of the pulses of clock signals $\phi_1$ and $\phi_2$.

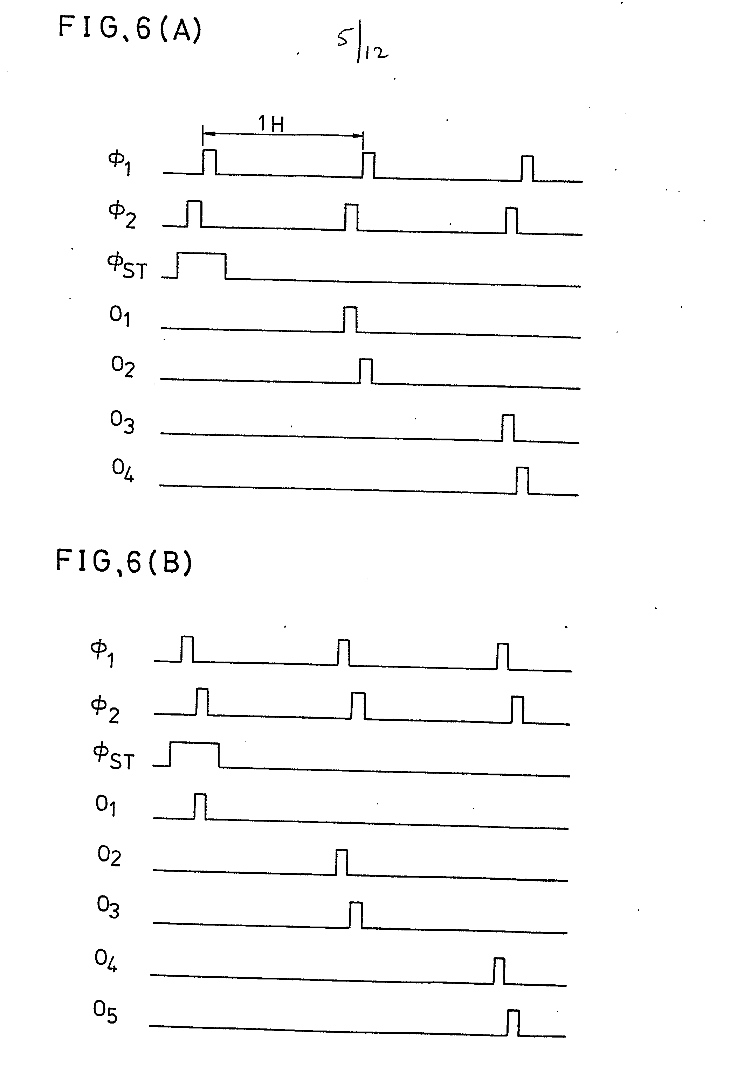

The above explanation is made for clock signals $\phi_1$ and $\phi_2$ shown in FIG. 6, but in actual operation of FIG. 3 the clock signals $\phi_1$ and $\phi_2$ of modified timing as shown in FIG. 6(A) and FIG. 6(B) should be used, and the output signals $O_1$, $O_2$, $O_3$, $O_4$ ... are obtained as shown in FIG. 6(A) and FIG. 6(B). And by using the output signals of FIG. 6(A) in a first field of the interlace and the output signal of FIG. 6(B) in the second field, respectively, a desired operation of FIG. 3 is obtainable. That is, the vertical shift register 302 produces output pulses $O_1$, $O_3$, $O_5$ ... at each pulses of the second clock signal $\phi_2$ and issues output pulses $O_2$, $O_4$, ... at pulses of the first clock signal $\phi_1$. And by inversing the order of phase of the first clock signal $\phi_1$ and the second clock signal $\phi_2$ as shown in FIG. 6(A) and FIG. 6(B), pulse train of output signals at output terminals $O_1$, $O_2$, $O_3$, $O_4$ ... is obtainable as shown in FIG. 6(A) and FIG. 6(B). That is, in the first field shown in FIG. 6(A), input signal $\phi_{ST}$ fed into the vertical shift register 302 at the time point of the pulse of the first clock signal $\phi_1$ is output to the first output terminal $O_1$ at the time point of the pulse of the second clock signal $\phi_2$ after one horizontal scanning time period H, and to the output terminal $O_2$ the pulse is issued at the time point of a pulse in the second clock signal $\phi_2$ immediately after the above-mentioned output to the first output terminal $O_1$. And with respect to the output terminals $O_3$ and $O_4$, the above-mentioned steps at the output terminals $O_1$ and $O_2$ repeat in the same way. Accordingly, the output signals are issued, making signal pairs of pair $O_1$ and $O_2$, pair $O_3$ and $O_4$, ... repeating at every time period of one horizontal scanning.

In the second field shown in FIG. 6(B), input signal $\phi_{ST}$, fed into the vertical shift register 302 at the time point of the pulse of the first clock signal $\phi_1$, is output to the first output terminal $O_1$ at the time point of the pulse of the second clock signal after one horizontal scanning time period H, and to the output terminal $O_2$ the pulse is issued at the time point of a pulse in the second clock signal $\phi_2$ immediately after the above-mentioned output to the first output terminal $O_1$. And with respect to the output terminals $O_4$ and $O_5$, the above-mentioned steps at the output terminals $O_2$ and $O_3$ repeat in the same way. Accordingly, the output signals are issued making such signal pairs as pair $O_2$ and $O_3$, pair $O_4$ and $O_5$, ..., repeating at every time period of one horizontal scanning.

Overall explanation of the solid state imaging apparatus of FIG. 3 is elucidated hereafter. Objective image projected on the photodiodes 305 is converted into electric signal by the photodiode 305, and the electric signal is read out through a first selection gate 315 controlled by control signal even through a first horizontal line 307 ($L_1$), and through a vertical line 306 ($\ell_1$) and further through a second selection gate 303 to a first output terminal 308. Output signal from the photodiode 305' of the second line is similarly read out through another first selection gate 316, through another vertical line $\ell_2$ and further through another second selection gate 304 to a second output terminal 309. The second selection gates 303 and 304 are controlled by a horizontal shift register 301, thereby horizontally scanning the output signal in the horizontal direction.

The vertical shift register 302, as has been elucidated, is driven in the manner as elucidated with reference to FIG. 6(A) and FIG. 6(B). Accordingly, as has been elucidated with reference to FIG. 4 and FIG. 6(A) and FIG. 6(B), the control signal impressed on the horizontal lines 307 are impressed on a pair of $L_1$ and $L_2$, a next pair of $L_3$ and $L_4$, further next pair of $L_5$ and $L_6$ ... in the first field. And in the second field, control pulses are impressed on a pair of $L_2$ and $L_3$, another pair of $L_4$ and $L_5$, ... . Thus the above-mentioned simultaneous two-line vertical scanning is made. Since the control output signal from the output terminals $O_1$, $O_2$, $O_3$, ... are directly given to the horizontal lines $L_1$, $L_2$, $L_3$ ..., respectively, the horizontal lines receive vertical control signals $O_1$, $O_2$, $O_3$, $O_4$, ... of FIG. 6(A) or FIG. 6(B). That is in a manner that the control signal pairs $O_1$ and $O_2$, or $O_3$ and $O_4$, ... of FIG. 6(A), or $O_2$ and $O_3$, or $O_4$ and $O_5$, ... in FIG. 6(B) are given with small time differences between the pulses within each pair as shown in FIG. 6(A) and FIG. 6(B). That is, only one control signal from the vertical shift register 302 is given to horizontal line group 307 at one time, and therefore every photodiodes 305, 305' ... are given with equal charges through stray capacities from the horizontal lines, and therefore no flickering is substantially produced.

Incidentally, in FIG. 6(A) and FIG. 6(B), the starting signal $\phi_{ST}$ has covered timing of both pulses of each pair of the clock signals $\phi_1$ and $\phi_2$, but apart from the above example, it is only necessary that the starting signal $\phi_{ST}$ should be in synchronism merely to the first clock signal $\phi_1$. And the first pulse of the second clock signal $\phi_2$, which is within a timing covered by the duty time of the signal pulse of the starting signal $\phi_{ST}$, is not necessarily required.

As has been elucidated, the embodiment of FIG. 3 has no shortcoming of the flickering and furthermore, switching devices which has been necessitated between the output terminals of the vertical shift register and the horizontal lines can be eliminated.

The read out signals of a photodiode 305 and a next photodiode 305' are given to the output terminals 308 and 309 through the first selection switches 315 and 316, and second selection switches 303 and 304, respectively, by controlling of a corresponding stage of the horizontal shift register 301. And the two read out signals at the output terminals 308 and 309 which are read out by two pulses in the same pair, such as $O_1$ and $O_2$, or $O_3$ and $O_4$ in FIG. 6(A), or $O_2$ and $O_3$, or $O_4$ and $O_5$ in FIG. 6(B), are

16

always summed up by a circuit (not shown in FIG. 3) to produce one signal of a picture element of one horizontal line of the two-line scanning. Since all the signals are used after summing up two signals of neighboring lines at corresponding horizontal position, even if some spurious signal is generated, for instance, due to noises given through stray capacities or the like, the summing up of the two signals substantially eliminates adverse effect of such spurious signal in the reproduced picture. In the example of FIG. 3 + FIG. 4 to be operated as shown in FIG. 6(A) and FIG. 6(B), horizontal lines of neighboring dispositions are connected to corresponding ones of the output terminals $O_2$, $O_4$ ... and the output terminals $O_1$, $O_3$ ..., thus utilizing all the output terminals of the vertical shift register 302, which hitherto are not utilized in the conventional circuit. Therefore, substantially the same shift register as the prior art circuit can be used.

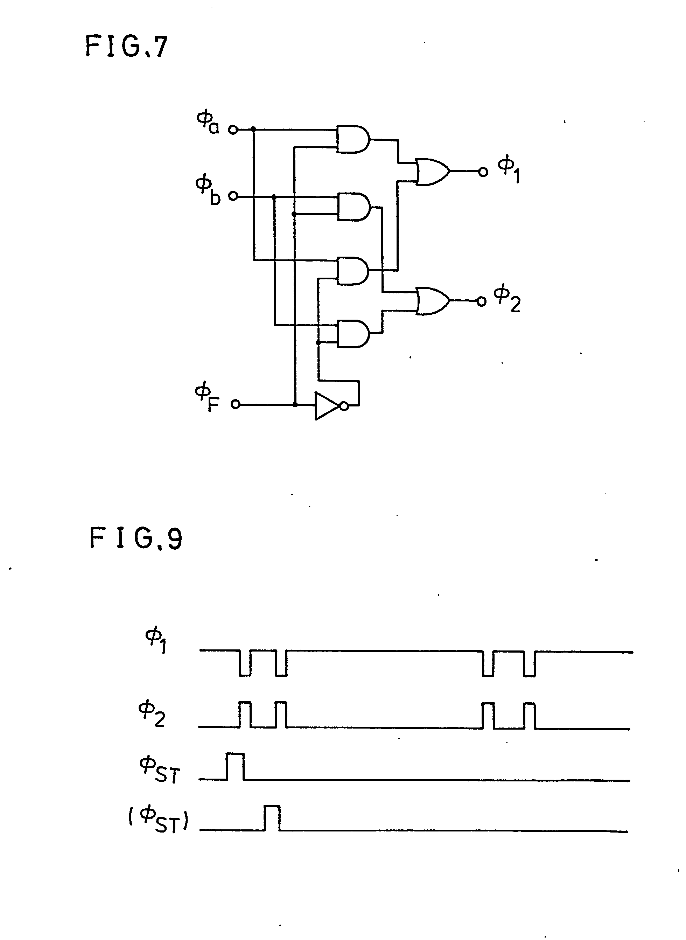

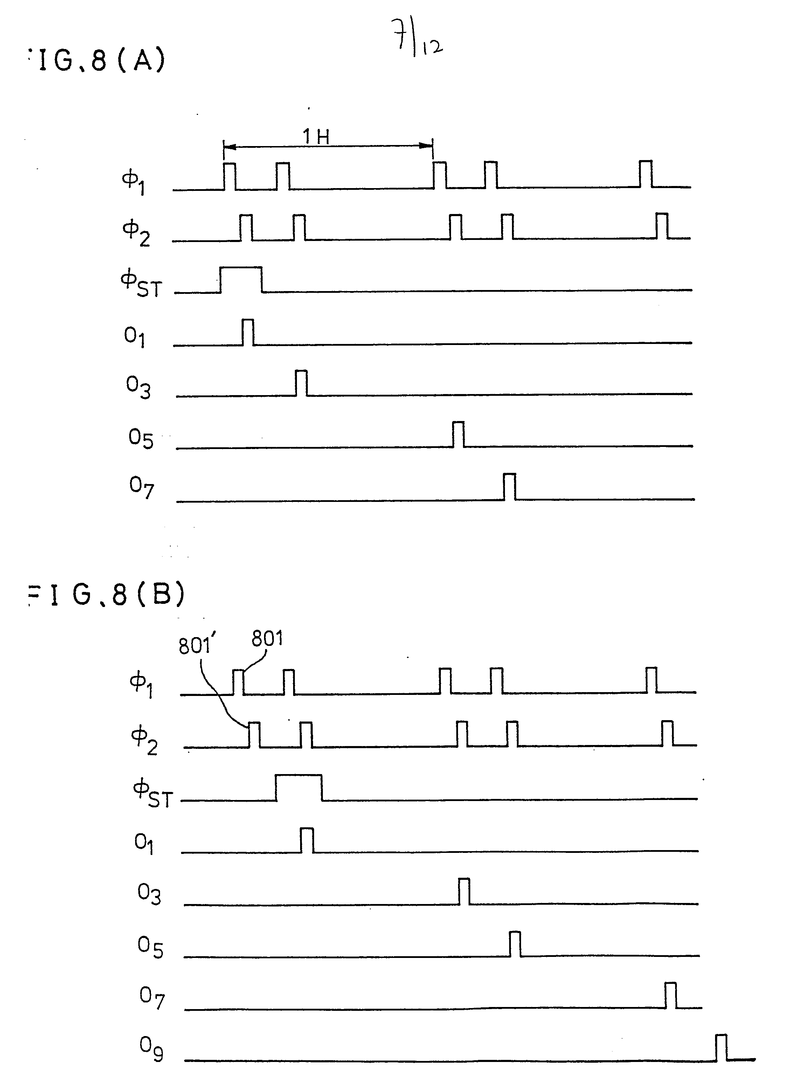

Clock signals $\phi_1$ and $\phi_2$ of FIG. 6(A) and FIG. 6(B) can be produced, for instance, by using a circuit shown in FIG. 7 wherein double phase driving pulses $\phi_a$ and $\phi_b$ are interchangedly issued by means of control signal $\phi_F$ (H, L).

In embodying the present invention the same effect is obtainable even by connecting the horizontal line $L_1$, $L_2$, ... and output terminals $O_1$, $O_2$ ... in the combination:

$$
\left.
\begin{array}{l}
O_1 \text{ to } L_1 \\
O_3 \text{ to } L_2 \\
O_5 \text{ to } L_3
\end{array}
\right\} \quad \cdots\cdots\cdots\cdots\cdots (1), \text{ or}
$$

$$
\left.
\begin{array}{l}
O_2 \text{ to } L_1 \\
O_4 \text{ to } L_2 \\
O_6 \text{ to } L_3
\end{array}
\right\} \quad \cdots\cdots\cdots\cdots\cdots (2).
$$

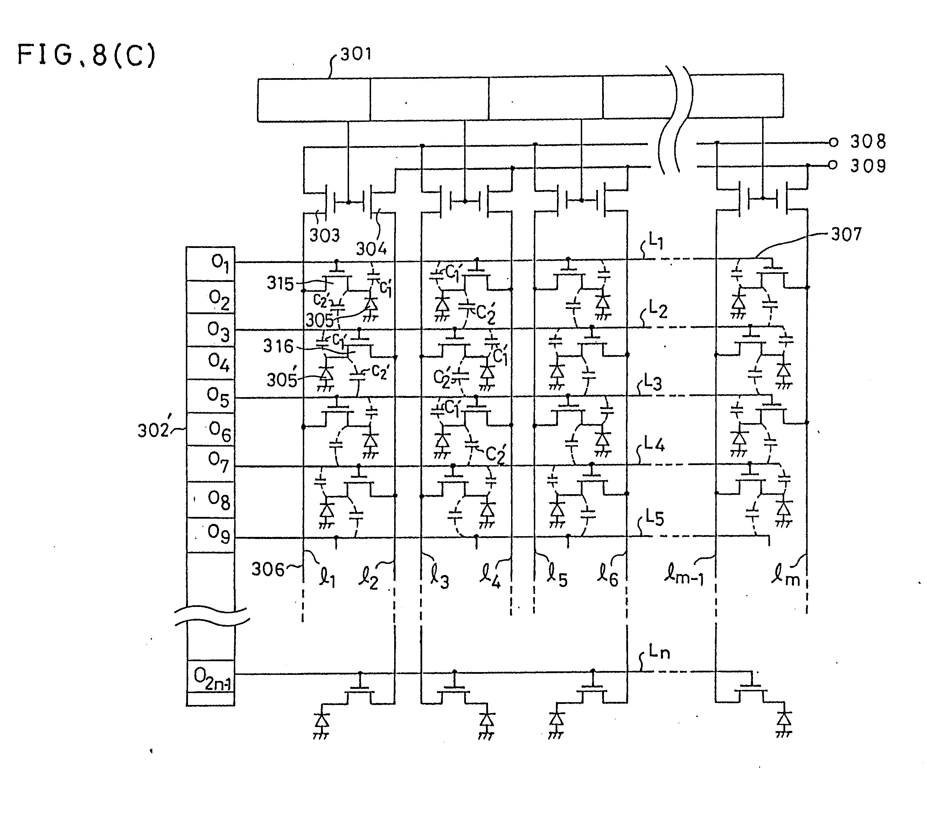

In the above-mentioned cases of connections, utility of the shift register is equal to that of the conventional shift register, and only odd number output or even number output of the shift register are utilized. In this case, the input clock signals to the vertical shift register are as shown in FIG. 8(A) and FIG. 8(B) which show the cases of utilizing the odd number output $O_1$, $O_3$, $O_5$ ... of the shift register. the circuit configurations for the example of FIG. 8(A) and FIG. 8(B) are shown in FIG. 8(C) and FIG. 8(D), respectively. In FIG. 8(C), wherein the shift register 302' has about 2n stages, line $L_1$, $L_2$, $L_3$ ... are connected to the output terminals $O_1$, $O_3$, $O_5$ ... . In FIG. 8(D), the output connection of the shift register 302' is made between even number output terminals and sequential horizontal lines, that is, output terminals $O_2$, $O_4$, $O_6$ ... are connected to the horizontal lines $L_1$, $L_2$, $L_3$ ... .

In the examples of FIG. 8(C) and FIG. 8(D), the first clock signal $\phi_1$ and the second clock signal $\phi_2$ each has two pulses within every horizontal scanning period time, thereby shifting the shift register 302' for two-steps in each horizontal scanning time, thereby sending two-paired pulses $O_1$ and $O_3$, or $O_5$ and $O_7$, or $O_3$ and $O_5$, or $O_7$ and $O_9$ ... to paired neighboring two horizontal lines. The switching for the fields is made by shifting the phase of the $\phi_{ST}$ pulses with respect to the clock signals $\phi_1$ and $\phi_2$, as shown in FIG. 8(A) and FIG. 8(B). Thus in FIG. 8(A), within one horizontal scanning line time period H, pair pulses $O_1$ and $O_3$, or $O_5$ and $O_7$... as in FIG. 8(A) or the pair pulses $O_3$ and $O_5$, or $O_7$ and $O_9$ ... as in

FIG. 8(B) are obtainable.

Instead of the above-mentioned example of FIG. 8(A) and FIG. 8(B), where pulse $\phi_{ST}$ has duty time and phase such as to cover the timing of pulses of the clock signals $\phi_1$ and $\phi_2$, the duty time of the pulse $\phi_{ST}$ may be such that it covers only the pulse of the first clock signal $\phi_1$, and it is sufficient that the duty time of the pulse $\phi_{ST}$ covers only the timing of a pulse of the first clock signal $\phi_1$.

In the case of FIG. 8(B), the first pulses of $\phi_1$ and $\phi_2$ do nothing in the shift register, accordingly these first pulses may be omitted.

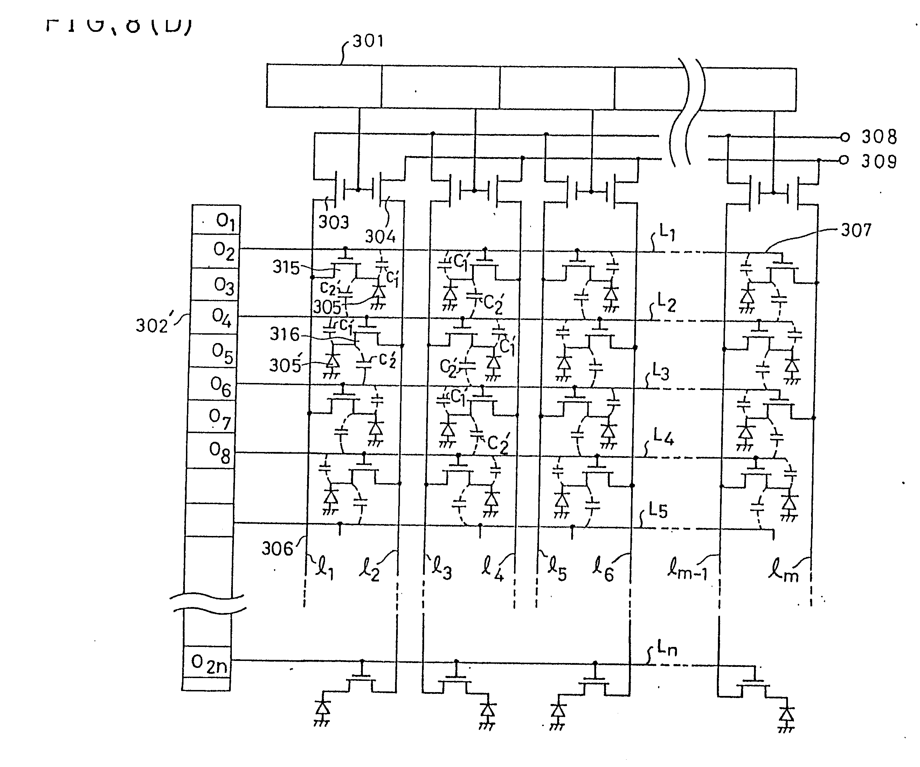

FIG. 9 shows a modired example of the clock signals wherein clock signal $\phi_2$ is only an inversed signal to the clock signal of $\phi_1$. In such case the clock signal generator can be simplified.

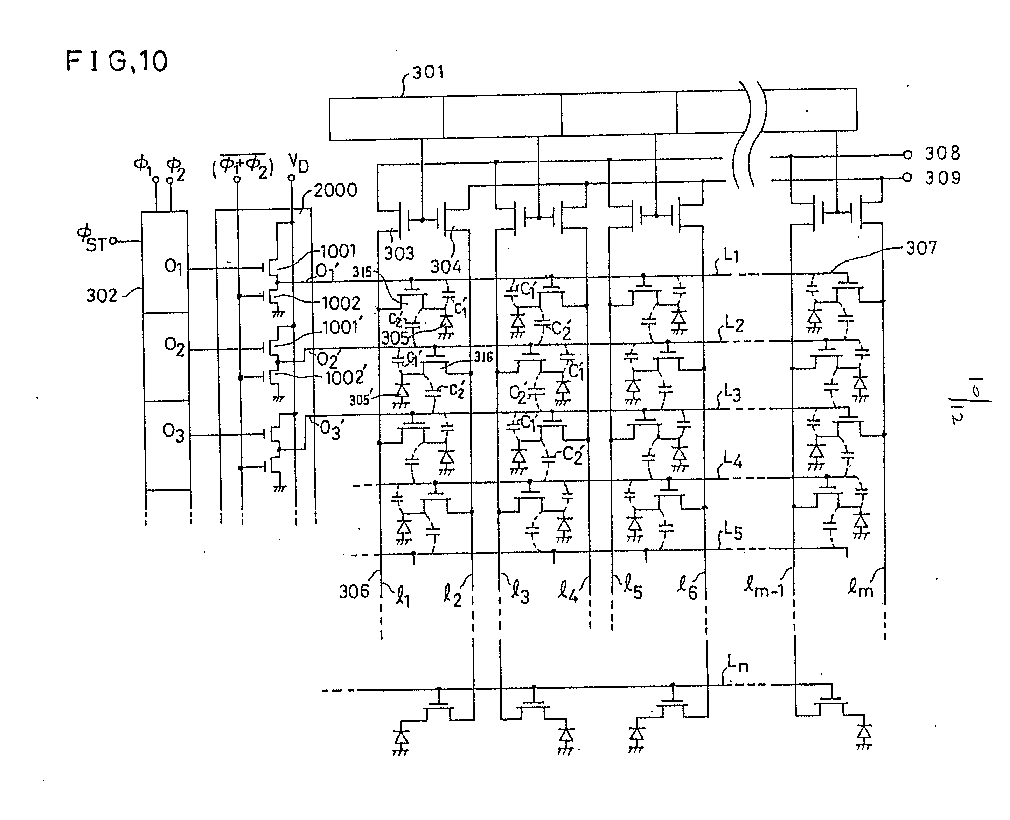

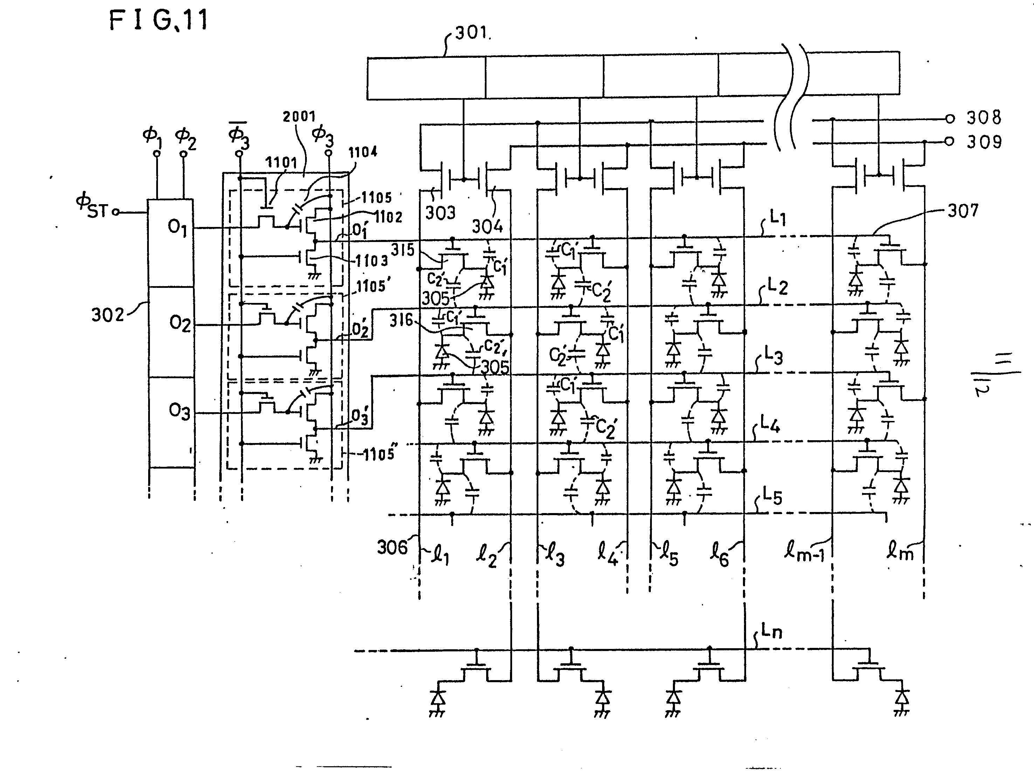

Instead of the direct coupling of the output terminals of the vertical shift register 302 or 302' and the horizontal lines $L_1$, $L_2$, $L_3$ ... , connection between the shift register output terminals and the horizontal lines can be made with a buffer circuit inbetween as shown in FIG. 10 or FIG. 11.

In FIG. 10, the buffer circuit 2000 has source-to-drain series-connected MOS FET 1001 + 1002, 1001' + 1002' ... and gate of the first MOS FETs 1001, 1001' ... are connected to the output terminal $O_1$ $O_2$ .. of the shift register 302, and gates of the other MOS FETs 1002, 1002' ... are common
connected to the clock signal input terminal $(\bar{\phi}_1 + \bar{\phi}_2)$.
And sources of the MOS FET 1001, 1001' ... are connected
to positive power source terminal. And junction points $O_1$'
$O_2$' ... between the source-drain series-connection are
connected to the horizontal lines $L_1$, $L_2$ ... . This
circuit can provide the same control signals as the
preceding examples and further enables to adjust DC mean
potential of the horizontal lines.

FIG. 11 shows still another modification which
has another buffer circuit 2001 between the shift register and
the horizontal lines. The buffer circuit comprises a set of latches
1105, 1105',... . Each latch 1105 ... comprises MOS FET 1101,
1102, 1103 and capacitor 1104, wherein a pair of clock
signals $\phi_3$ and $\bar{\phi}_3$ which is inverse to $\phi_3$, are impressed,
and thereby the output pulses of the shift register 302' are
latched. The transistors 1101, 1102 and 1103 perform similar functions
as those of transistors 400, 401, 401, 402 and $C_1$ of FIG. 4. Each of the
circuits 1105, 1105', 1105" ... performs such function that under the
impression of the clock pulse $\bar{\phi}_3$, input signal is applied
across the capacitor C through the transistor 1101, and
under impression of the clock pulse $\phi_3$ the signal across
the capacitor 1104 is read out to the output terminal $O_1$',
and the output is given as the potential of the pulse $\phi_3$
which is given through the transistor 1102. Accordingly,

the pulse $\phi_3$ should cover the timing of the inverse signal of the logic sum of the signals $\phi_1$ and $\phi_2$. For instance, if clock signal pulses $\phi_1$, $\phi_2$ and $\phi_3$ as shown in FIG. 11 are used, then output pulses of the additional shift registers 1105 + 1005' + 1005" + ... are issued in synchronism with the clock signal $\phi_3$. Accordingly, the horizontal lines can receive the control signals in the same way as that of the preceding examples.

In the examples FIG. 10 and FIG. 11, vertical control voltages to be impressed on the horizontal lines $L_1$, $L_2$, $L_3$ ... are all equal. Accordingly, reading out conditions for all of one horizontal array of the photo electric devices are equal each other. As has been elucidated, in case of two-line simultaneous reading of the picture elements since two sequential horizontal scanning output signals are utilized after combining together, even though the signal levels of $L_1$, $L_3$, $L_5$ ... and the signal level of $L_2$, $L_4$, $L_6$ ... are different from each other, the signals to form picture signals are sum of the signals on $L_1$ and $L_2$, or $L_3$ and $L_4$, or ... . Therefore, no adverse fractuation of brightness takes place. On the contrary if output signals of a horizontal row of the photoelectric devices are utilized independently, as has been elucidated with reference to the prior art of FIG. 2, differences of brightness due to differences of stray capacitances cause undesirable brightness fractuation. For instance, two line scanning is made by impressing the vertical control signals on $L_1$ and $L_2$, or $L_3$ and $L_4$, or $L_5$ and $L_6$, ..., then the combined horizontal scanning signals necessarily include difference between signals produced by scanning respective horizontal lines. Therefore, as has been elucidated, when the differences of the influences of the vertical control scanning signals are not desirable, it is necessary to use the circuit of FIG. 8, FIG. 10 or FIG. 11, wherein the difference of influences of the vertical control signals are eliminated.

In case of FIG. 8, FIG. 10 and fig. 11, the brightness fractuation problems have been overcome. However, in case of FIG. 8 circuit, number of stage of the vertical shift register 302 become twice as large as the number of the vertical shift register of FIG. 2. But in the circuits of FIG. 10 and FIG. 11, the number of stages of the vertical shift registers are the same as that of FIG. 2, accordingly the circuit configuration and cost is moderate.

Furthermore, in the circuits of FIG. 10 and FIG. 11, the circuit is advantageous with regard to driving pulse voltage. That is, in the circuit of FIG. 10, in order to turn on MOS FET, for instance 1001, it is necessary to provide a driving pulse which is higher by threshold voltage of the MOS FET above that of the output terminal $O_1$ of the shift register. On the other hand in the example

of FIG. 11, bootstrap circuit is constituted by a capacitor 1104, therefore the voltage of the MOS FET 1102 easily turns on the MOS FET 1102 if the output potential of the shift register $O_1$ is higher than the threshold value. As a result, in case equal voltages are impressed on the horizontal lines $L_1$, $L_2$, $L_3$ ..., the voltages of the clock signal pulses $\phi_1$ and $\phi_2$ to be impressed on the shift register 302 can be made lower in FIG. 11 in comparison with the case of the FIG. 10.

What is claimed is

1.        A solid state imaging apparatus comprising:

a plurality of photoelectric devices disposed in two-dimensional arrangement, and

reading means for scanningly reading out signals of said photoelectric devices through gate means corresponding to said photoelectric devices,

characterized in that

said reading means comprises vertical shift register means to impress vertical scanning control signals sequentially on said gates for neighboring two horizontal lines of the photoelectric devices within every horizontal scanning time period.

2.        A solid state imaging apparatus in accordance with claim 1, wherein

said vertical scanning control signals have at least two pulses of different phases.

3.        A solid state imaging apparatus in accordance with claim 2, wherein

phase sequence between at least two pulses of said at least two pulses during the first field is opposite to that of during the second field.

4.        A solid state imaging apparatus in accordance with claim 1, wherein

at least two pulses within a horizontal scanning time period, and

a number of said at least two pulses for a first horizontal scanning of said first field is different by a number of pulses from a first horizontal scanning of said second field.

5.      A solid state imaging apparatus in accordance with claim 1, wherein

said means to impress vertical scanning control signal comprises a shift register and a buffer circuit connected to said shift register in a manner to issue said vertical scanning control signal through said buffer circuit to said gate means through corresponding horizontal lines.

6.      A solid state imaging apparatus in accordance with claim 2, wherein

said means to impress vertical scanning control signal comprises a shift register and a buffer circuit connected to said shift register in a manner to issue said vertical scanning control signal through said buffer circuit to said gate means through corresponding horizontal lines.

7.      A solid state imaging apparatus in accordance with claim 3, wherein

said means to impress vertical scanning control signal comprises a shift register and a buffer circuit connected to said shift register in a manner to issue said vertical scanning control signal through said buffer circuit to said gate means through corresponding horizontal lines.

8.      A solid state imaging apparatus in accordance with claim 4, wherein

said means to impress vertical scanning control signal comprises a shift register and a buffer circuit connected to said shift register in a manner to issue said vertical scanning control signal through said buffer circuit to said gate means through corresponding horizontal lines.

9.      A solid state imaging apparatus in accordance with claim 8, wherein

said buffer circuit is a set of latches each connected between output terminal of said shift register and said horizontal line.

## FIG.1(A) (Prior Art)

101

$H_n$

$(H_n)$

$H_{n+1}$

$(H_{n+1})$

$H_{n+2}$

## FIG.1(B) (Prior Art)

101

$H_n$ — $L_1$

$(H_n)$ — $L_2$

$H_{n+1}$ — $L_3$

$(H_{n+1})$ — $L_4$

$H_{n+2}$ — $L_5$

FIG.2 (Prior Art)

FIG.3

# FIG.4

4/12

302

# FIG.5

FIG, 6(A)

1H

$\phi_1$

$\phi_2$

$\phi_{ST}$

$0_1$

$0_2$

$0_3$

$0_4$

FIG, 6(B)

$\phi_1$

$\phi_2$

$\phi_{ST}$

$0_1$

$0_2$

$0_3$

$0_4$

$0_5$

# FIG.7

# FIG.9

7/12

FIG.8(A)

FIG.8(B)

FIG.8(C)

FIG. 8(D)

FIG.10

$\phi_1$ $\phi_2$ $(\overline{\phi_1 + \phi_2})$ $V_D$

301

308
309

2000

$\phi_{ST}$

302

$O_1$ 1001

$O_1'$ 315

303 304

1002

$O_2$ 1001'

$O_2'$

1002'

$O_3$ 305'

$O_3'$

$L_1$

307

$L_2$

$L_3$

$L_4$

$L_5$

$C_1'$ $C_2'$ 305 316 $C_1'$ $C_2'$

$C_1'$ $C_2'$

$C_1'$ $C_2'$

$L_n$

306 $l_1$ $l_2$ $l_3$ $l_4$ $l_5$ $l_6$ $l_{m-1}$ $l_m$

10/12

0091678

F I G.11

12/12

F I G．12